# EUROPEAN PATENT SPECIFICATION

(11) **EP 1 145 998 B1**
(45) Date of publication and mention of the grant of the patent: **10.12.2003**
(21) Application number: 01103800.7
(22) Date of filing: 16.02.2001
(51) Int. Cl.: B65G 47/14, B65B 27/10

(54) **Store for bars**
Lager für Stangen
Dispositif de stockage de barres

(30) Priority: 22.02.2000 IT UD000039
(43) Date of publication of application: 17.10.2001
(73) Proprietor: M.E.P. Macchine Elettroniche Piegatrici S.p.A., I-33010 Reana del Rojale (UD) (IT)
(72) Inventor: Del Fabro, Giorgo, 33019 Tricesimo(UD) (IT); Del Fabro, Marcello, 33100 Udine (IT)
(74) Representative: Petraz, Gilberto Luigi

(56) References cited:
- EP-A- 0 096 644
- DE-A- 2 230 789
- DE-B- 1 014 935

## Description

### FIELD OF THE INVENTION

The invention concerns a store for bars which can be used to receive, stock and discharge in a substantially automatic manner long elements in bars, such as in particular but not exclusively metal round pieces.

The invention is used preferably in plants for shearing to size and preparing bundles of metal round pieces which are then used, for example, to make stirrups or cages for reinforcement purposes in the building trade.

However, the invention can equally well be used in any field where it is necessary to receive, stock and then discharge and/or transfer, in an orderly and selective fashion, long elements such as rods, strips, tubes or similar, in any material whatsoever such as for example metal, wood or plastic.

### BACKGROUND OF THE INVENTION

In plants where long elements in bars are prepared, such as for example metal round pieces which have been sheared to size, the problems concerning transport, storage and selective discharge according to the type, length or destination of the product are well-known.

These operations are mainly carried out manually and require a large labor force, enormous effort, dangers of injury to the workers and the use of external equipment such as cranes, bridge cranes, manipulators, translators or otherwise, both to deposit and also to discharge the bars.

Various solutions have been proposed to at least partly automate the steps of collecting and storing the bars, but these solutions have shown themselves to be complex, costly, difficult to manage, not very reliable, and occupy a lot of space.

Moreover, these solutions entail considerable operating difficulties when it is necessary to remove specific packs of bars contained in the seatings which are most difficult to access, for example those highest up or furthest inside the warehouse.

Document DE-B-1014935, which constitutes the most relevant state of the art, shows a store for rolled bars including a plurality of loading chambers arranged along an inclined plane. The loading chambers are associated with closing levers, by means of which they can be selectively opened or closed to allow the relative chamber to be loaded, or not.

The document does not teach, however, to move the bars, discharged into the individual chambers, using the same elements used for opening-closing the chambers; to be more exact, in this document the chambers constitute definitive seatings for the bundles of bars, already tied, which then, in order to be further moved, require the intervention of outside means such as bridge cranes, cranes or similar.

The present Applicant has devised and embodied this invention to overcome these shortcomings and to obtain other advantages.

### SUMMARY OF THE INVENTION

The invention is set forth and characterized in the main claim, while the dependent claims describe other characteristics of the main embodiment.

The purpose of the invention is to achieve a store to selectively collect and stock long products in bars, able to perform substantially automatically the steps of receiving the products, selectively storing them according to the type of product, and of discharging them also selectively according to a specific requirement.

Another purpose is to achieve an automatic store which is compact and not bulky, safe for the workers, which requires little or no labor force, reduced maintenance, easy and economical to manage and which facilitates the steps of selective retrieval of the bars from any seating in the store.

In the following description we shall talk mainly about bars, but it is obvious that the invention can be used also for stocking and moving other types of products, such as tubes, rods or strips, also in non-metal material such as wood or plastic.

The automatic store according to the invention comprises at least a seating suitable to receive and accumulate a plurality of bars, the seating being inclined with respect to a supporting and reference plane.

In a preferential embodiment, the store comprises several separate seatings arranged substantially aligned along a plane inclined with respect to the supporting and reference plane.

In an advantageous embodiment, every seating has an accumulation size correlated to the number of bars needed to form a bundle, so that every discharge cycle of one of the seatings can automatically be connected to a bundle-forming cycle.

In a preferential embodiment, the upper side of the inclined plane is associated or can be associated with means to feed and/or distribute the bars, while the lower side is associated or can be associated with means to discharge the bars.

In cooperation with said discharge means, means to tie and/or label the bars may be included.

Every seating is associated with at least a movable element able to assume three positions, according to the specific operation performed at the time by-the store.

The movable element may consist of a single body which extends substantially for the entire length of the relative seating, or of a plurality of coaxial elements mounted on a single axis of drive, or of a plurality of elements with an independent yet synchronized drive.

In its first position, the movable element is arranged in a position which closes the relative seating. This position is assumed when the store is inactive, or when the store is stocking the bars only temporarily.

This position is also assumed when the bars are being unloaded and discharged from a different seating other than that connected to a specific movable element; in the closed position, in fact, every movable element defines a segment of the inclined plane which serves to transfer the bars, falling due to the effects of gravity, from a seating to the discharge means located underneath.

Every movable element has a second, partly open position, wherein it allows to stop the bars, which have been discharged onto the inclined plane and which are sliding along it due to gravity, and to make them fall inside the relative seating.

Finally, the movable element has a third, at least partly rotated position, wherein it lifts the bars of the relative seating and unloads them onto the inclined plane, to allow them to descend due to gravity and then to be discharged.

In a preferential embodiment, each movable element has a section conformed substantially like a hook, able to temporarily contain and move the bars contained in the relative seating.

This hook shape has at least a substantially plane and rectilinear outer side which, in the closed position of the movable element, is able to perform the function of the inclined plane in continuity with the other movable elements which are also located in the closed position.

One embodiment of the invention provides to arrange two stores in an adjacent and symmetrical position wherein the upper sides of the respective inclined planes are facing one another.

In this case, in an advantageous embodiment, in cooperation with the upper facing sides of the two stores there is a distributor element able to receive the bars from transport and unloading means, and to assign them to one or another of the stores according to the type of product, the respective unloading position or the residual capacity of the stores.

### BRIEF DESCRIPTION OF THE DRAWINGS

These and other characteristics of the invention will become clear from the description of some preferential embodiments, given with reference to the attached drawings, wherein:
- Fig. 1: shows a transverse section of a first form of embodiment of the store for bars according to the invention;
- Fig. 2: shows a variant of Fig. 1.

### DETAILED DESCRIPTION OF PREFERRED EMBODIMENTS

In the attached drawings the number 10 denotes in its entirety a store able to temporarily contain and discharge bars 11, in this case consisting of metal round pieces.

The store 10 extends for a length which is compatible with the length of the bars 11 which have to be stored, for example around 12m in this specific case.

It consists of a base 12 which rests on a plane of reference 30, a vertical structure comprising front and rear supporting uprights 13, and a perimeter frame comprising cross-pieces 14 defining a plane, inclined with respect to the plane of reference 30, which extends from an upper side 15a to a lower side 15b.

A plurality of intermediate uprights 16 are mounted on said cross-pieces 14; they are distanced from each other along said inclined plane and are able to define a plurality of seatings 17 to contain the bars 11 (in this case three), which are separate from each other and substantially aligned parallel along the inclined plane.

It comes within the field and scope of the invention that the store 10 can comprise a single seating 17, or two or four or more.

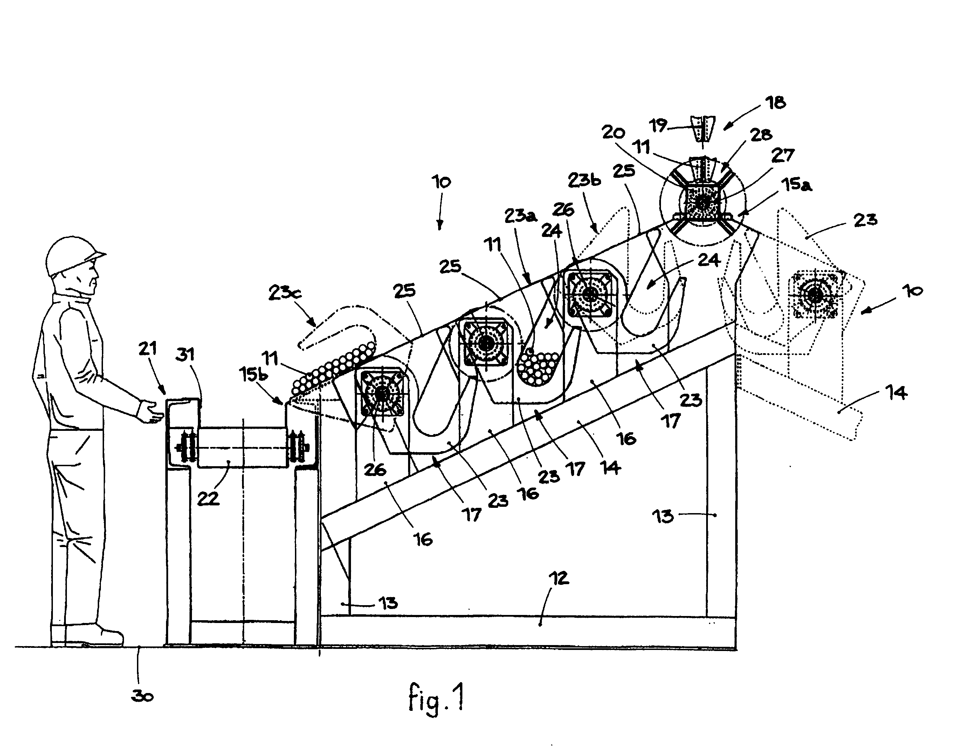

Means 18 to feed the bars cooperate with the upper side 15a of the inclined plane; in the case of Fig. 1 they consist of an unloading gripper 19 and a rotary distribution element 20, the function of which will be described hereafter.

In cooperation with the lower side 15b there are means 21 to collect and discharge the bars, in this case consisting of a rollerway 22 arranged parallel to the store 10.

It is obvious that the store 10 can cooperate with every type of feed means, for example a crane, a bridge crane, a manipulator, a belt system, a drawing system with rolls or similar; in the same way, it can cooperate substantially with every type of discharge means, for example a collection bed, a revolving or rotating plane, a belt-type conveyor, a gripper, a removable bag or otherwise.

Each of the seatings 17 is associated with a respective movable element 23 with the function of containing the bars 11 temporarily inside the relative seating 17 and of allowing them to be automatically and selectively discharged according to specific requirements.

By movable element 23 we include both a single element which extends over the entire length of the store 10 and also a plurality of elements 23 aligned along a common axis of rotation.

The movable elements 23 have a section conformed substantially like a hook defining a relative containing compartment 24 where the bars 11 accumulate and are contained..

On the outside, the movable elements 23 have at least a substantially plane and rectilinear side 25 which, in the closed position of the movable element 23, defines the inclined plane of the store 10 in continuity with the plane and rectilinear sides 25 of the other movable elements 23.

In the embodiment shown in Fig. 1, every movable element 23 can rotate around a substantially horizontal axis 26 arranged in correspondence with the upper part of the relative intermediate upright 16.

This embodiment ensures that the stresses and the loads deriving from the weight of the bars 11, particularly during the movement and unloading steps, are supported by the intermediate uprights 16, transmitted to the cross-pieces 14 and from them to the uprights 13, the base 12 and the plane 30.

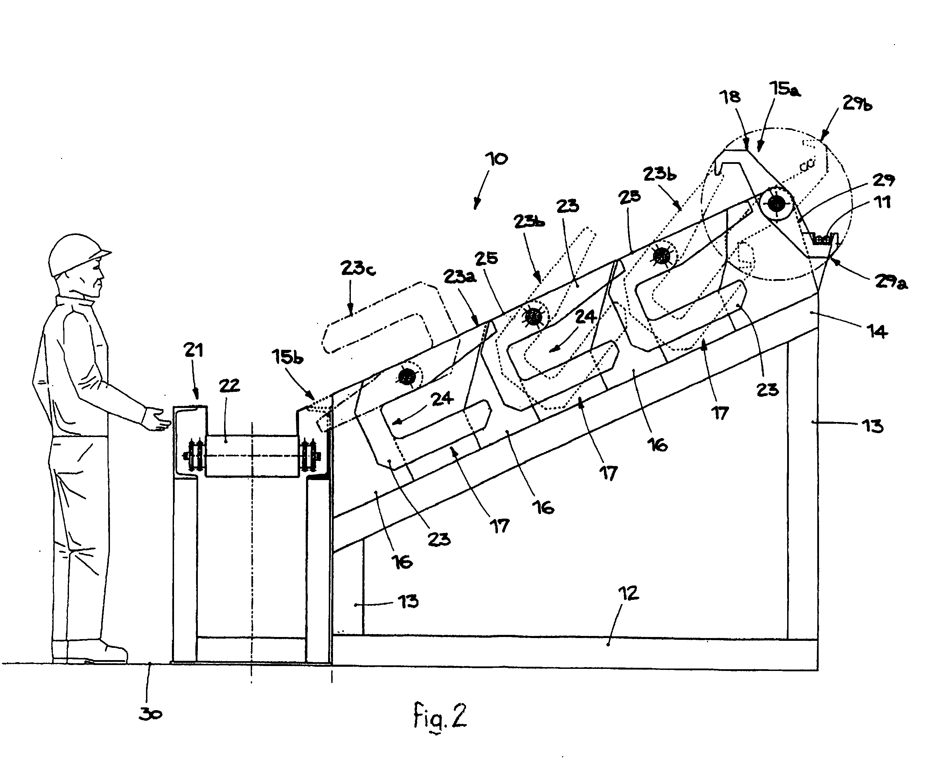

In the embodiment shown in Fig. 2, every movable element 23 rotates around a horizontal axis 26 arranged cantilevered with respect to the relative intermediate upright 16.

The axis 26 may be defined by a rotation shaft advantageously associated with an electric drive motor, which is not shown here.

It comes within the field and scope of the invention that the movable elements 23 are driven by means of pneumatic or hydraulic actuators, or by means of levers, gears or any other suitable means.

Each of these movable elements 23 has a first closed position 23a, indicated by a continuous line in the Figures, assumed when the store 10 is inactive, that is, when there is no manipulation of the bars 11 contained in the respective seatings 17.

This position is also selectively assumed by the movable elements 23 when the bars 11 are discharged and unloaded from a seating 17 other than that of the specific movable element 23. For example, when the bars 11 to be unloaded are contained in the seating 17 located at the top of the store 10, that is to say, the seating 17 facing the upper side 15a, the movable elements 23 of the other seatings 17 remain in the closed position 23a so that the respective straight sides 25 define a continuous surface of the inclined plane.

In this way, as we shall see later, the bars 11 can slide along the inclined plane and accumulate on the collection and discharge means 21 arranged in cooperation with the lower side 15b of the inclined plane.

Each of the movable elements 23 can assume a second, partly open position, indicated with a line of dashes and the number 23b, wherein they allow to stop the bars 11 unloaded along the inclined plane and to make them fall inside the relative seating 17, and, to be more exact, inside the relative containing compartment 24.

As can be seen in the Figures, with reference to the seating 17 near the upper side 15a of the inclined plane, when the movable element 23 is in position 23b, the means 18 unload the bars 11 onto the inclined plane and cause them to fall inside the compartment 24.

In the case of Fig. 1, the unloading is achieved by rotating the element 20 around the respective substantially horizontal axis 27.

The element 20 has a plurality of distinct accumulation sectors 28, each able to contain a plurality of bars 11.

Each sector 28 is able to be selectively filled with bars 11, when it is in the substantially horizontal position and oriented upwards wherein it cooperates with the unloading means, in this case the gripper 19.

Then, the element 20 rotates around the axis 27, unloading the bars 11 onto the inclined plane.

If the bars 11 meet a closed movable element 23, they continue their descent along the inclined plane until they meet the first partly open movable element 23, and thus fall into the relative compartment 24.

In the case of Fig. 1, in a position adjacent to the store 10 there is a second store 10, shown partly and with a line of dashes, arranged symmetrically to the first. The second store 10 allows to double the capacity of storing the bars 11, optimizing the space occupied and allowing to use the same feed means 19 and distribution means 20.

The rotation in one direction or another of the rotary element 20 allows to unload the bars 11 into one store 10 or the other according to the specific accumulation requirements or the capacity of one or the other to take more bars 11.

The choice of one store 10 or the other may also depend on the specific position where the bars 11 are to be discharged onto the respective means 21, for example in relation to logistic requirements of the plant or according to the position of the equipment used for subsequent treatment of the bars 11.

In Fig. 2 the element to distribute the bars consists of a rotary manipulator arm 29 which can assume a first position 29a, indicated with a continuous line, wherein the bars are received from feed means (not shown here), and a second position 29b indicated with a line of dashes, wherein the bars are unloaded.

In order to discharge the bars 11 contained in a specific seating 17, for example according to a particular type of product in terms of thickness, length, client, finishing, etc., the relative movable element 23 is turned over from the closed position 23a to an unloading position 23c (shown by a line of dots and dashes).

With the movable element 23 in position 23c, the bars 11 slide due to gravity along the inclined plane until they fall onto the discharge means 21, which are advantageously provided with a raised edge 31 to contain the bars 11.

Obviously, as we have said, if the bars 11 are removed from the highest seating 17 in the store 10, the movable elements 23 of the seatings 17 located lower down will be closed to allow the bars 11 to descend to the discharge means 21.

All the steps of feeding the bars 11, selecting the specific seating 17, selective filling, closing the seatings 17, selectively retrieving and unloading the bars 11 can be managed automatically by means of a control unit by a single worker.

In the control unit it is possible to memorize the data concerning the bars 11 stored and match these data to one or more defined seatings 17.

In this way, a simple request for one type of bars 11 can set off an automatic procedure to identify, select, retrieve and unload the bars 11 from the store 10 to the rollerway 22.

Although several preferential embodiments have been described, various modifications and variants may be made to the invention but these shall remain within the scope defined in the appended claims.

## Claims

1. Store for bars, usable to receive, stock and discharge long elements, such as bars (11), round pieces, rods, strips, tubes or similar, comprising at least one seating (17) suitable to receive and store a plurality of said bars (11), said at least one seating (17) being arranged along a plane inclined with respect to a horizontal plane (30) and being associated with at least a movable element (23) able to assume a first position (23a) for closing the relative seating (17) and defining a segment of said inclined plane, and a second position (23b) for partly opening the relative seating (17), wherein it is able to stop the bars (11) which slide along said inclined plane and to make them fall into the relative seating (17), the store being **characterized in that** said movable element (23) has a shape able to house the bars contained in the relative seating (17) and can selectively assume a third position (23c), rotated with respect to the first (23a) and the second (23b) positions, wherein it is able to lift and unload the bars (11) from the relative seating along said inclined plane to allow them to be discharged.

2. Store for bars as in Claim 1, **characterized in that** it comprises a plurality of said seatings (17), each suitable to receive and accumulate a plurality of said bars (11), said seatings (17) being arranged substantially aligned along the inclined plane.

3. Store for bars as in any claim hereinbefore, **characterized in that** said movable element (23) has a section conformed substantially like a hook defining at least a compartment (24) to contain and move the relative bars (11).

4. Store for bars as in Claim 3, **characterized in that** said substantially hook-shaped conformation comprises at least a substantially plane and rectilinear outer side (25) able to perform the function, when the movable element (23) is in its said closed position (23a), of a segment of the inclined plane in continuity with the sides (25) of the other movable elements (23) in their closed position.

5. Store for bars as in any claim hereinbefore, **characterized in that** said movable element (23) is able to rotate around a respective substantially horizontal axis (26) .

6. Store for bars as in Claim 5, **characterized in that** said movable elements (23) is associated with respective drive means able to make it rotate around said axis (26).

7. Store for bars as in Claim 1, **characterized in that** said inclined plane is defined by an upper side (15a) and by a lower side (15b), said upper side (15a) being able to cooperate with means (18, 20, 29) to feed and/or distribute the bars (11) and said lower side (15b) being able to cooperate with means (21) to collect and discharge the bars (11).

8. Store for bars as in Claim 7, **characterized in that** said distribution means comprise a rotary element (20) including a plurality of sectors (28) to contain the bars (11).

9. Store for bars as in Claim 7, **characterized in that** said distribution means comprise manipulator means (29) including at least a first position (29a) to receive the bars and a second position (29b) to unload the bars.

10. Store for bars as in Claim 7, **characterized in that** said collection and discharge means (21) comprise a rollerway (22) extending in length substantially for the entire length of the store (10).

11. Store for bars as in Claim 2, **characterized in that**, for each of said seatings (17), said movable element (23) consists of a single element arranged substantially for the entire length of the store (10).

12. Store for bars as in Claim 5, **characterized in that**, for each of said seatings (17), said movable element (23) consists of a plurality of elements aligned substantially on the same axis of rotation (26).

13. Store for bars as in Claim 1, **characterized in that** it comprises a supporting base (12), a plurality of vertical uprights (13), a perimeter frame comprising a plurality of cross-pieces (14) able to define said inclined plane and a plurality of intermediate uprights (16) arranged along said inclined plane and able to define said at least one seating (17).

14. Store for bars as in Claims 5 and 13, **characterized in that** said axis. of rotation (26) is arranged substantially in correspondence with the upper part of a relative intermediate upright (16).

15. Store for bars as in Claim 1, **characterized in that** said seating (17) has a storage size substantially correlated to the number of bars (11) needed to form a bundle.

16. Store for bars as in Claim 2, **characterized in that** it is able to cooperate with a control unit to automatically identify, select, retrieve and unload the bars (11) from every specific seating (17) selected.

17. Store for bars comprising two substantially identical stores (10) as claimed in any claim hereinbefore from 7 to 16 and arranged in a symmetrical way one respect to the other, the upper sides (15a) of the respective inclined planes cooperating and the two stores sharing the feed means (18) and/or distribution means (20, 29).

## Patentansprüche

1. Lager für Stangen, das zur Aufnahme, Lagerung und zum Austragen von langen Elementen, wie etwa Stangen (11), Rundstücken, Stäben, Bändern, Rohren oder dergleichen, verwendbar ist und folgendes aufweist: mindestens eine Aufnahme (17), die zur Aufnahme und Lagerung einer Vielzahl der Stangen (11) geeignet ist, wobei die mindestens eine Aufnahme (17) entlang einer Ebene angeordnet ist, die in bezug auf eine Horizontalebene (30) geneigt ist, und mindestens einem bewegbaren Element (23) zugeordnet ist, das imstande ist, eine erste Position (23a) zum Schließen der relativen Aufnahme (17) und zum Bilden eines Segments der geneigten Ebene sowie eine zweite Position (23b) zum teilweisen Öffnen der relativen Aufnahme (17) einzunehmen, wobei es imstande ist, die Stangen (11), die entlang der geneigten Ebene gleiten, anzuhalten und zu veranlassen, daß diese in die relative Aufnahme (17) fallen,
wobei das Lager **dadurch gekennzeichnet ist,**
**daß** das bewegbare Element (23) eine Gestalt hat, die imstande ist, die in der relativen Aufnahme (17) enthaltenen Stangen aufzunehmen, und selektiv eine dritte Position (23c) einnehmen kann, die in bezug auf die erste Position (23a) und die zweite Position (23b) gedreht ist, wobei es imstande ist, die Stangen (11) aus der relativen Aufnahme entlang der geneigten Ebene zu heben und zu entladen, damit sie ausgetragen werden können.

2. Lager für Stangen nach Anspruch 1,
**dadurch gekennzeichnet,**
**daß** es eine Vielzahl der Aufnahmen (17) aufweist, die jeweils geeignet sind, eine Vielzahl der Stangen (11) aufzunehmen und zu speichern, wobei die Aufnahmen (17) im wesentlichen entlang der geneigten Ebene ausgefluchtet angeordnet sind.

3. Lager für Stangen nach einem der vorhergehenden Ansprüche,
**dadurch gekennzeichnet,**
**daß** das bewegbare Element (23) einen Bereich hat, der im wesentlichen hakenförmig ausgebildet ist und mindestens einen Raum (24) bildet, um die relativen Stangen (11) aufzunehmen und zu bewegen.

4. Lager für Stangen nach Anspruch 3,
**dadurch gekennzeichnet,**
**daß** die im wesentlichen hakenförmige Ausbildung mindestens eine im wesentlichen ebene und geradlinige Außenseite (25) aufweist, die imstande ist, dann, wenn das bewegbare Element (23) in seiner geschlossenen Position (23a) ist, die Funktion eines Segments der geneigten Ebene auszuüben, und zwar in Kontinuität mit den Seiten (25) der anderen bewegbaren Elemente (23) in ihrer geschlossenen Position.

5. Lager für Stangen nach einem der vorhergehenden Ansprüche,
**dadurch gekennzeichnet,**
**daß** das bewegbare Element (23) imstande ist, sich um eine im wesentlichen horizontale Achse (26) zu drehen.

6. Lager für Stangen nach Anspruch 5,
**dadurch gekennzeichnet,**
**daß** das bewegbare Element (23) einer Antriebseinrichtung zugeordnet ist, die imstande ist, es zum Drehen um die Achse (26) zu veranlassen.

7. Lager für Stangen nach Anspruch 1,
**dadurch gekennzeichnet,**
**daß** die geneigte Ebene von einer Oberseite (15a) und einer Unterseite (15b) gebildet ist, wobei die Oberseite (15a) imstande ist, mit Einrichtungen (18, 20, 29) zum Zuführen und/oder Verteilen der Stangen (11) zusammenzuwirken, und wobei die Unterseite (15b) imstande ist, mit Einrichtungen (21) zum Sammeln und Austragen der Stangen (11) zusammenzuwirken.

8. Lager für Stangen nach Anspruch 7,
**dadurch gekennzeichnet,**
**daß** die Verteilungseinrichtungen ein Drehelement (20) aufweisen, das eine Vielzahl von Sektoren (28) zur Aufnahme der Stangen (11) aufweist.

9. Lager für Stangen nach Anspruch 7,
**dadurch gekennzeichnet,**
**daß** die Verteilungseinrichtungen eine Manipuliereinrichtung (29) aufweisen, die mindestens eine erste Position (29a) zur Aufnahme der Stangen und eine zweite Position (29b) zum Entladen der Stangen aufweist.

10. Lager für Stangen nach Anspruch 7,
**dadurch gekennzeichnet,**
**daß** die Sammel- und Austrageinrichtungen (21) einen Rollenförderer (22) aufweisen, der sich in Längsrichtung im wesentlichen über die Gesamtlänge des Lagers (10) erstreckt.

11. Lager für Stangen nach Anspruch 2,
**dadurch gekennzeichnet,**
**daß** das bewegbare Element (23) für jede der Aufnahmen (17) aus einem Einzelelement besteht, das im wesentlichen über die Gesamtlänge des Lagers (10) angeordnet ist.

12. Lager für Stangen nach Anspruch 5,
**dadurch gekennzeichnet,**
**daß** das bewegbare Element (23) für jede der Aufnahmen (17) aus einer Vielzahl von Elementen besteht, die im wesentlichen auf derselben Drehachse (26) ausgefluchtet sind.

13. Lager für Stangen nach Anspruch 1,
**dadurch gekennzeichnet,**
**daß** es folgendes aufweist:
eine tragende Basis (12), eine Vielzahl von vertikalen Ständern (13), einen Umfangsrahmen, der eine Vielzahl von Querstücken (14) aufweist, die imstande sind, die geneigte Ebene zu bilden, und eine Vielzahl von Zwischenständern (16), die entlang der geneigten Ebene angeordnet und imstande sind, die mindestens eine Aufnahme (17) zu bilden.

14. Lager für Stangen nach Anspruch 5 und 13,
**dadurch gekennzeichnet,**
**daß** die Drehachse (26) im wesentlichen in Entsprechung mit dem oberen Teil eines relativen Zwischenständers (16) angeordnet ist.

15. Lager für Stangen nach Anspruch 1,
**dadurch gekennzeichnet,**
**daß** die Aufnahme (17) eine Lagergröße hat, die im wesentlichen mit der Anzahl von Stangen (11) korreliert ist, die erforderlich ist, um ein Bündel zu bilden.

16. Lager für Stangen nach Anspruch 2,
**dadurch gekennzeichnet,**
**daß** es imstande ist, mit einer Steuereinheit zusammenzuwirken, um die Stangen (11) von jeder gewählten speziellen Aufnahme (17) automatisch zu identifizieren, auszuwählen, abzurufen und zu entladen.

17. Lager für Stangen, das zwei im wesentlichen identische Lager (10) nach einem der Ansprüche 7 bis 16 aufweist, die relativ zueinander symmetrisch angeordnet sind, wobei die Oberseiten (15a) der jeweiligen geneigten Ebenen zusammenwirken und die beiden Lager die Zuführeinrichtung (18) und/oder die Verteilungseinrichtungen (20, 29) gemeinsam verwenden.

## Revendications

1. Magasin pour barres, destiné à recevoir, stocker et décharger de longs éléments, tels que des barres (11), des pièces rondes, des tiges, des bandes, des tubes ou similaires, comprenant au moins un logement (17) conçu pour recevoir et ranger une pluralité de dites barres (11), ledit au moins un logement (17) étant disposé le long d'un plan incliné par rapport à un plan horizontal (30) et étant associé à au moins un élément mobile (23) capable d'occuper une première position (23a) pour la fermeture du logement en question (17) et la définition d'un segment dudit plan incliné, et une seconde position partiellement ouverte (23b) afin d'ouvrir partiellement le logement en question (17), dans lequel il est capable d'arrêter les barres (11) qui glissent le long dudit plan incliné et de les faire tomber dans le logement en question (17), le magasin étant **caractérisé en ce que** ledit élément mobile (23) a une forme capable de loger les barres contenues dans le logement en question (17) et peut occuper de façon sélective une troisième position (23c), tournée par rapport aux première (23a) et deuxième (23b) positions, dans laquelle il est capable de soulever et décharger les barres (11) du logement en question le long dudit plan incliné pour leur permettre d'être déchargées.

2. Magasin pour barres tel que dans la revendication 1, **caractérisé en ce qu'**il comprend une pluralité desdits logements (17), chacun étant conçu pour recevoir et accumuler une pluralité desdites barres (11), lesdits logements (17) étant disposés essentiellement alignés le long du plan incliné.

3. Magasin pour barres tel que dans une quelconque revendication précédente, **caractérisé en ce que** l'élément mobile (23) comprend une section essentiellement conforme à un crochet définissant au moins un compartiment (24) pour contenir et déplacer les barres ( 11 ) en question.

4. Magasin pour barres tel que dans la revendication 3, **caractérisé en ce que** ladite configuration essentiellement en forme de crochet comprend au moins une face externe (25) essentiellement plane et rectiligne capable d'assurer la fonction, lorsque l'élément mobile (23) est dans sa dite position fermée (23a), d'un segment du plan incliné dans la continuité des faces (25) des autres éléments mobiles (23) dans leur position fermée.

5. Magasin pour barres tel que dans une quelconque revendication précédente, **caractérisé en ce que** lesdits éléments mobiles (23) sont capables de tourner autour d'un axe (26) respectif essentiellement horizontal.

6. Magasin pour barres tel que dans la revendication 5, **caractérisé en ce que** lesdits éléments mobiles (23) sont associés à des moyens d'entraînement respectifs capables de les faire tourner autour dudit axe (26).

7. Magasin pour barres tel que défini dans la revendication 1, **caractérisé en ce que** ledit plan incliné est défini par une face supérieure (15a) et par une face inférieure (15b), ladite face supérieure (15a) étant capable de coopérer avec des moyens (18, 20, 29) destinés à fournir et/ou distribuer les barres (11), et ladite face inférieure (15b) étant capable de coopérer avec des moyens (21) destinés à rassembler et décharger les barres (11).

8. Magasin pour barres tel que dans la revendication 7, **caractérisé en ce que** lesdits moyens de distribution comprennent un élément rotatif (20) comprenant une pluralité de secteurs (28) qui contiennent les barres (11).

9. Magasin pour barres tel que revendiqué dans la revendication 7, caractérisé en que les moyens de distribution comprennent des moyens manipulateurs (29) comprenant au moins une première position (29a) pour recevoir les barres et une seconde position (29b) pour décharger les barres.

10. Magasin pour barres tel que dans la revendication 7, **caractérisé en ce que** lesdits moyens de rassemblement et de déchargement (21) comprennent un transporteur à rouleaux (22) s'étendant en longueur essentiellement sur toute la longueur du magasin (10).

11. Magasin pour barres tel que dans la revendication 2, caractérisé en que, pour chaque logement (17), ledit élément mobile (23) est composé d'un seul élément prévu essentiellement pour toute la longueur du magasin (10).

12. Magasin pour barres tel que dans la revendication 5, **caractérisé en ce que**, pour chaque logement (17), ledit élément mobile (23) est composé d'une pluralité d'éléments alignés essentiellement sur le même axe de rotation (26).

13. Magasin pour barres tel que dans la revendication 1, **caractérisé en ce qu'**il comprend une base de support (12), une pluralité de montants verticaux (13), un cadre de périmètre comprenant une pluralité de traverses ( 14) capables de définir ledit plan incliné et une pluralité de montants intermédiaires (16) disposés le long dudit plan incliné et capables de définir ledit au moins un logement (17).

14. Magasin pour barres tel que dans les revendications 5 et 13, **caractérisé en ce que** ledit axe de rotation (26) est disposé essentiellement en correspondance avec la partie supérieure d'un montant intermédiaire en question (16).

15. Magasin pour barres tel que dans la revendication 1, **caractérisé en ce que** ledit logement (17) présente une taille essentiellement en corrélation avec le nombre de barres (11) nécessaires pour former une botte.

16. Magasin pour barres tel que dans la revendication 2, **caractérisé en ce qu'**il est capable de coopérer avec une unité de commande pour identifier, sélectionner, récupérer et décharger automatiquement les barres (11) de chaque logement spécifique (17) sélectionné.

17. Magasin pour barres comprenant deux magasins (10) essentiellement identiques tels que revendiqués dans une quelconque revendication précédente de 7 à 16 et disposés d'une façon symétrique l'un par rapport à l'autre, les faces supérieures (15a) des plans inclinés concernés coopérant et les deux magasins partageant les moyens de fourniture (18) et/ou les moyens de distribution (20, 29).
